# EUROPEAN PATENT APPLICATION

(11) **EP 1 918 459 A2**
(43) Date of publication of application: **07.05.2008**
(21) Application number: 07250237.0
(22) Date of filing: 20.01.2007
(51) Int. Cl.: E01F 9/06

(54) **Warning apparatus**

(30) Priority: 03.11.2006 CN 200610137670
(71) Applicant: Chen, Ching Hsiung, Hsinchu Hsien (TW)
(72) Inventor: Chen, Ching Hsiung, Hsinchu Hsien (TW)
(74) Representative: Gee, Steven William

(57) **Abstract**

A warning apparatus is provided, whose main body (1) includes a monolithically formed transparent tempered material with a thickness. The top of the main body (1) includes at least two injections units (2). The injection units are upward bumps. The injection units are less than 10mm in height. The curvature on the surface of injection unit bumps changes at different height of the bumps. The bottom of the main body (1) includes at least two reflection units (3). The reflection units (3) are downward bumps. The bottom of the main body (1) also includes a reflective layer (4) attached to the outer surface of the reflection units so that the light entering the main body can be reflected by the reflective layer (4) to provide warning. The durable, low-height injection unit bumps will minimize the impact on the driving safety when the tires run over, while providing effective visual warning.

## Description

### FIELD OF THE INVENTION

The present invention generally relates to a warning apparatus for traffic roads, and more specifically to a road warning apparatus that has lower surface bump, higher reflective effect, and durable structure.

### BACKGROUND OF THE INVENTION

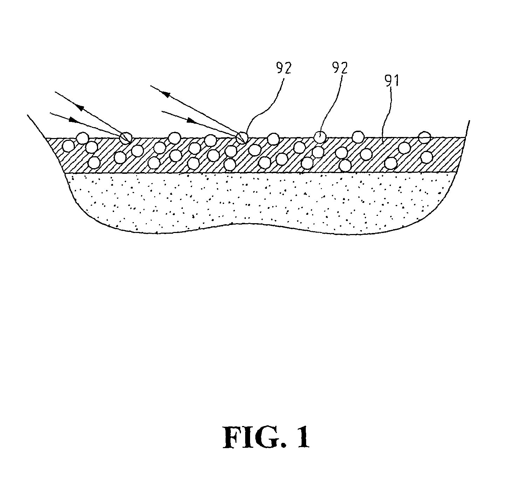

The marks on the road surface are for providing the drivers with the visible direction so as to keep proper space between vehicles. The ideal situation is that the marks on the road surface must be able to provide suitable visibility under any circumstances, rain or shine, day or night. FIG. 1 shows a cross-sectional view of a conventional road mark. A conventional road mark 91 is mainly made of thermal-plastic. To reflect light for warning, small glass beads 92 with diameters ranging between 0.1-0.4 mm are added to the thermal plastic. Glass beads 92 can reflect the light from the headlights of the vehicles so that the driver can still see the lane division and the direction of the road when the visibility is low. However, when it rains in the evening, the 0.1-0.4mm glass beads are easily immersed by the rain, and fail to reflect the light properly. Therefore, the usability of such conventional road marks is impaired.

To solve the intrinsic problem of thermal-plastic marks, the conventional technique is to add a reflective warning apparatus at one or both ends of the road marks. The reflective warning apparatus is usually 19-25mm in height, and made of glass, aluminum alloy, or plastics. Because, in general, the normal rain will accumulate about 1mm to cover the road, this type of reflective waning apparatus can still provide the warning reflection, especially in the freeway system. Most traffic rules in the world enforce the regulation that the reflective warning apparatus should be less than 19mm in height for highways, and less than 25mm for local roads, which imposes the constrain in the use of reflective warning apparatus. In addition, the reflective warning apparatus forms a bump on the road surface that may cause discomfort, or even hazard, when the tires run over the reflective warning apparatus, which causes the tire skid or shift. Another concern is that the reflective warning apparatus may be easily damaged by the snowplow in the snowy area when the roads are covered in snow. On the other hand, it is difficult to keep the height of the reflective warning apparatus less than 3mm, as the protective shell for such apparatus, usually made of aluminum alloy or plastics, must be thicker than 3mm to provide sufficient protection to the apparatus as well as weather the weight of vehicles.

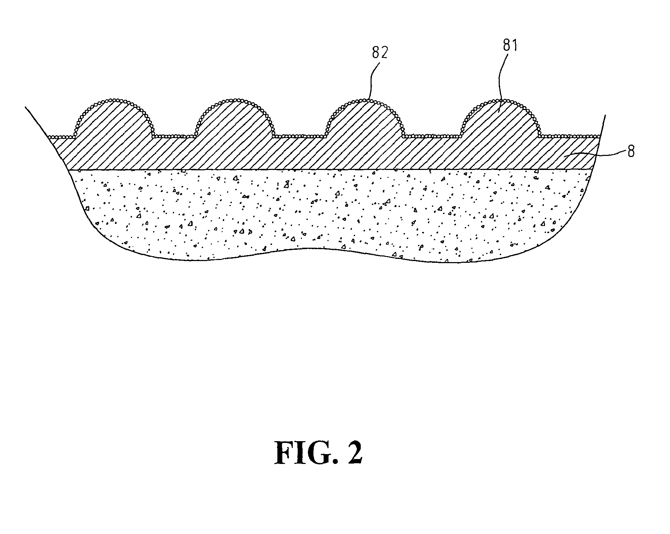

Because there exists safety concerns about the road marks, other types of structures have been proposed for improvement. For example, during the marking of the road marks, as shown in FIG. 2, a plurality of bumps 81 having 3mm in height is formed on the thermal-plastic road marks 8. The surface also includes a plurality of small glass beads 82 for reflecting the light for warning. Hence, for the accumulated rain of 1mm in the rainy night, glass beads 82 on the 3mm road marks can still reflect the light and stay visible. However, in actual application, this design usually suffers the problem of lack of durable strength. Thus, it is prone to damage or worn out easily by vehicles in a short period of time, and the glass beads may break off to lose the reflectivity. The current technique is to integrate tens of small beads into a large bead, which is further integrated into the thermal-plastic road marks. However, the integration of glass beads and the thermal-plastic road marks is still lack of the fixation strength, and can be easily broken off after a longer period of time of running over by vehicles. Based on the above disadvantages, the inventor of the present invention provides a noel structure with warning effect and traffic safety features to replace the convention reflective road marks.

### SUMMARY OF THE INVENTION

The present invention has been made to overcome the above-mentioned drawback of conventional reflective warning apparatus. The primary object of the present invention is to provide a warning apparatus that is low-height and durable. The warning apparatus of the present invention is monolithically made of a tempered transparent material, such as glass. The warning apparatus has a thickness with the injection unit and the reflection unit at the top and the bottom so as to reflect horizontal lights effectively. The warning apparatus, after installation, is only less 5mm over the road surface, and will not be immersed by the rain to lose the reflection for warning. As the bump after the installation is low, the warning apparatus will not affect the driving safety and remains to provide effective warning for drivers.

Another object of the present invention is to provide a warning apparatus that can be widely used in a plurality of occasions. In addition to reflect horizontal light, the warning apparatus of the present invention can also be slightly altered to reflect vertical light; hence, the warning apparatus can also be used on a vertical wall, such as the wall at a T-intersection, to provide warning for the drivers. The present invention can also be altered to reflect the light from above, such as installed on the flat platform of the elevator.

To achieve the above objects, the present invention provides a warning apparatus, whose main body includes a monolithically formed transparent tempered material with a thickness. The top of the main body includes at least two injections units. The injection units are upward bumps. The injection units are less than 10mm in height. The curvature on the surface of injection unit bumps changes at different height of the bumps. The bottom of the main body includes at least reflection units. The reflection units are downward bumps. The bottom of the main body also includes a reflective layer attached to the outer surface of the reflection units so that the light entering the main body can be reflected by the reflective layer to provide warning.

The foregoing and other objects, features, aspects and advantages of the present invention will become better understood from a careful reading of a detailed description provided herein below with appropriate reference to the accompanying drawings.

### BRIEF DESCRIPTION OF THE DRAWINGS

The present invention can be understood in more detail by reading the subsequent detailed description in conjunction with the examples and references made to the accompanying drawings, wherein:
FIG. 1 shows a cross-sectional view of a conventional road mark;
FIG. 2 shows a cross-sectional of yet another conventional road mark;
FIG. 3 shows a three-dimensional view of the present invention;
FIG. 4 shows a top view of the present invention;
FIG. 5 shows a cross-sectional view of the present invention;
FIG. 6 shows a top view of the second embodiment of the present invention;
FIG. 7A shows an actual application of the present invention;
FIG. 7B shows another actual application of the present invention;
FIG. 7C shows yet another actual application of the present invention;
FIG. 8A shows a top view of the third embodiment of the present invention;
FIG. 8B shows a cross-sectional view of the third embodiment of the present invention;
FIG. 9A shows a top view of the fourth embodiment of the present invention;
FIG. 9B shows a cross-sectional view of the fourth embodiment of the present invention;
FIG. 10 shows a top view of the fifth embodiment of the present invention;
FIG. 11 shows a bottom view of the sixth embodiment of the present invention;
FIG. 12A shows a top view of the seventh embodiment of the present invention;
FIG. 12B shows a cross-section view of the seventh embodiment of the present invention; and
FIG. 13 shows a cross-sectional view of the eighth embodiment of the present invention.

### DETAILED DESCRIPTION OF THE PREFERRED EMBODIMENTS

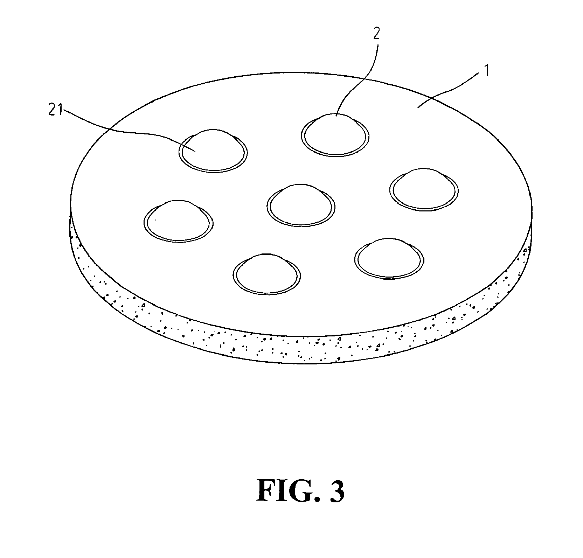

FIGs. 3, 4 & 5 show a three-dimensional view, a top view and a cross-section view of the present invention, respectively. A main body 1 of a warning apparatus of the present invention is monolithically formed by transparent tempered material. Main body 1 has a thickness. The top of main body 1 includes at least two injection units 2. Each injection unit 2 is an upward bump. The curvature on the surface of injection unit 2 changes at different height of the bumps. The present embodiment shows 7 injection units. Curve injection surface 21 of injection unit 2 allows the light from the horizontal direction to be refracted into main body 1. The bottom of main body 1 includes at least two reflection units 3. Each reflection unit 3 is a downward bump. The curvature on the surface of reflection unit 3 changes at different height of the bumps. The present embodiment shows 7 reflection units. The outer surface of curve reflection surface 31 of reflection unit 3 includes a reflective layer 4. For the ease of manufacturing, reflective layer 4 of the present invention is attached to the entire are of the bottom of main body 1. When the light shines on injection units 2 at the top of main body 1, curve injection surface 21 refracts the entering light to reflection units 3 at the bottom of main body 1. With reflective layer 4 on curve reflection surface 31, the light is reflected, and then refracted by curve injection surface 21 to provide the driver the visual warning.

To ensure that the warning apparatus of the present invention will not interfere the traffic and the visibility in rain when installed on the road, injection units 2 are limited to be less than 10mm in height, preferably less than 5mm, so that the normal rain will not immerse injection units 2 entirely. For the snowy area, injection units 2 can be designed to be less than 2mm in height to prevent interfering snowplow operation. Hence, when the warning apparatus is installed on the road, the potential interference caused by small-sized, low-height injection units 2 to the vehicles can be minimized, while maintaining the reflective warning effects. As the warning apparatus of the present invention is monolithically formed, injection units 2 will not break off easily, and thus is more durable for extended period of use.

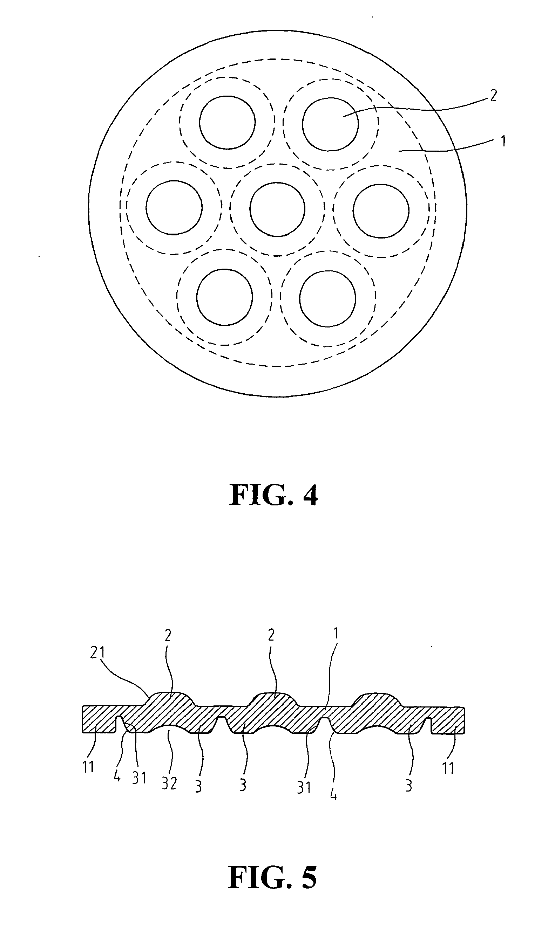

FIG. 5 shows that the bottom view of the bottom surface of main body 1, contacting the road surface, can be further processed or coarsened. The outer surface of reflective layer 4 is coarsened to increase the contact surface with the glue and improve the engagement with the road surface when installed. As shown in FIG. 5, the bottom of reflection units 3 can further includes cavities 32 to so that the glue can fill cavities 32 to increase the engagement strength. The circumference of the bottom of main body 1 includes a downward protruding frame 11. The protruding distance of frame 11 is at least the same as the height of the downward bump of reflection units 3 so that the present invention can be conveyed on the conveyor using frame 11 during the manufacturing process to avoid tilting, and have a stronger structure.

In the present embodiment, main body 1 is made of tempered glass material. To achieve good light penetration, the glass material has a low iron ingredient. That is, the Fe₂O₃ is less than 0.05%. The refractive index of the glass is between Nd1.4-1.9. Because the refractive index will affect the refraction and the reflection angles, the curvatures of curve injection surface 21 of injection units 2 and curve reflection surface 31 of reflection units 3 also depend on the refractive index. In the present embodiment, curve injection surface 21 and curve reflection surface 31 do not have the same curvatures, and each includes at least two curvatures, which changes at different height on the surfaces. For good reflectivity, each injection unit 2 has a corresponding reflection unit 3 in this embodiment. The diameter and the size of reflection unit 3 are both larger than those of injection unit 2. The shapes of injections units 2 and reflection units 3 are also dependent on the reflection effects.

In this embodiment, main body is made of transparent tempered glass material. Reflective layer 4 at the bottom of main body 1 is made of metal, such as aluminum or aluminum alloy, and the reflected light is white. To reflect a specific color of light, there are two approaches that the present invention can use. The first is to use the specific color of glass as main body 1. For example, a yellow glass used as main body can form yellow reflective light. The second approach is to use the original clear glass as main body and a thin film of specific color at the bottom of main body 1 before reflective layer 4 is formed. Therefore, when the light passes the color thin film, the reflective light shows the color of the thin film. For example, if the thin film is yellow, the reflective light will be yellow.

To protect injection units 2 of main body 1 from dust or mud accumulation and affecting the light penetration, this embodiment includes a dust preventive thin film on the top surface of main body 1. The dust preventive thin film is a thin film made of one of nano-scaled TiO, ZnO, Al₂O₃, SiO₂, glass powder, Au, Ag, Cu, Sn, and so on. The thin film can be formed by spray or thermal spray method. The think film prevents the dust from sticking to the surface, and when the tire of the vehicle runs over the surface, the surface gets cleaned. A protective layer can also be included on the outer surface of reflective layer 4 of main body 1. The protective layer can be formed by painting a layer of resin or paint, or other anti-erosion material to prolong the life span of the present invention.

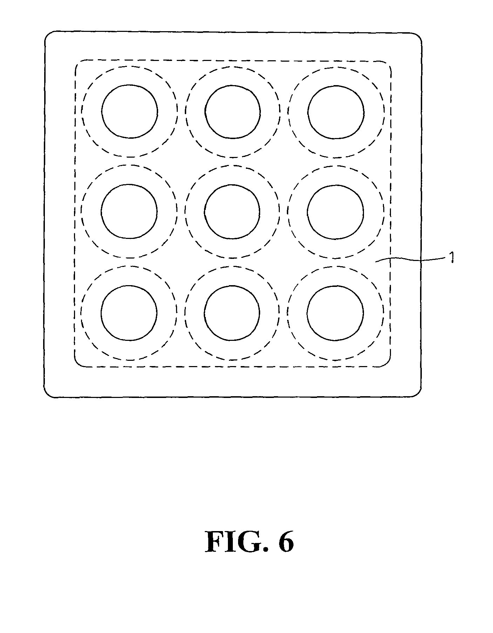

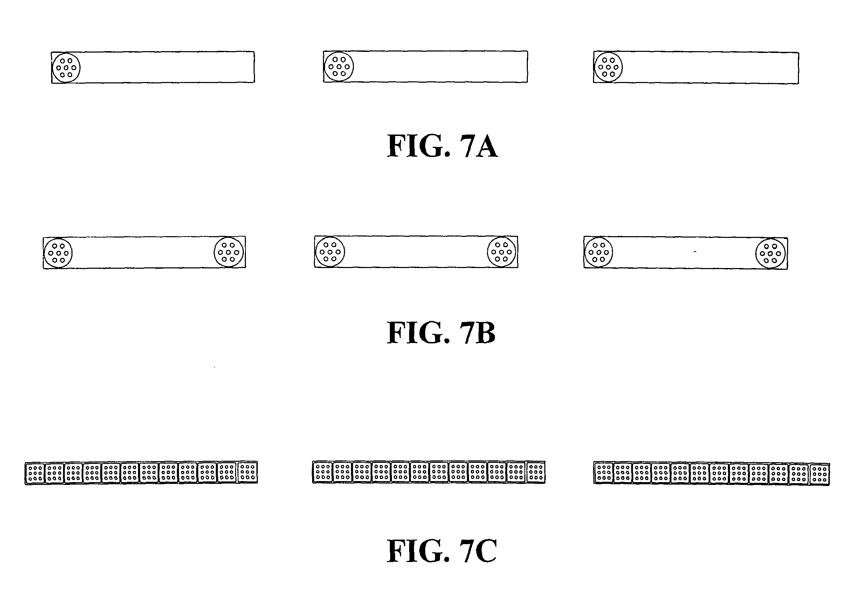

FIG. 6 shows a second embodiment of the present invention. The major difference in this embodiment is to change the shape of main body 1. As shown in FIG. 6, the shape of main body 1 is square, and main body 1 includes nine injection units 2 and nine reflection units 3, located on the top and the bottom of main body 1 respectively. The shape of the present invention is not limited to any specific type. The shape can also be triangular, rectangular, oval, or other shapes. The present invention can be installed at one end of the road marks, as shown in FIG. 7A, or at both ends of the road marks, as shown in FIG. 7B. Alternatively, the entire road mark can be made of the warning apparatus of the present invention, as shown in FIG. 7C. In the application of FIG. 7C, the shape of the warning apparatus of the present invention is preferably square or rectangular.

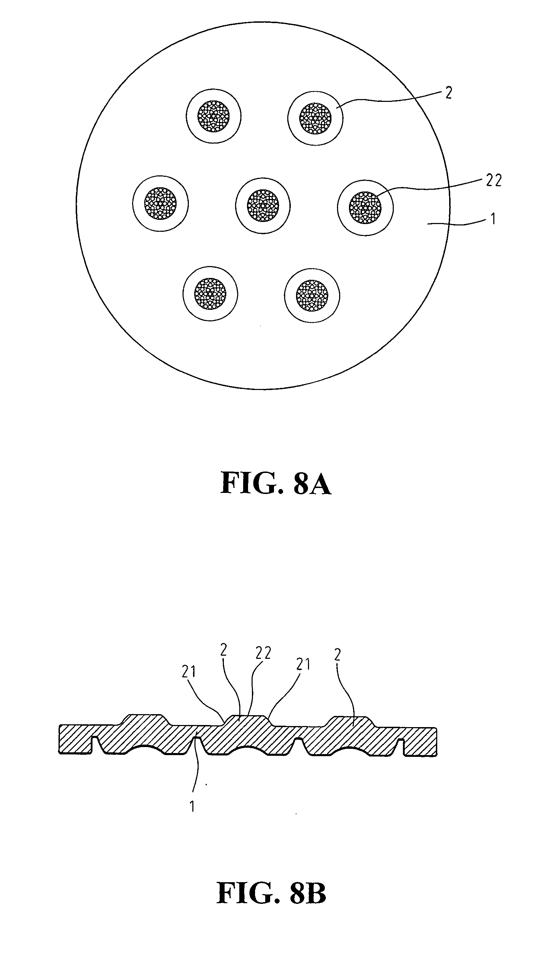

FIGs. 8A and 8B show the third embodiment of the present invention. This embodiment shows the different shape of the injection units. To improve the driving safety, the top of injection units 2 of main body 1 is flattened as a flat top surface 22 while the sides of the injection unit bumps remain as curve injection surface 21. Flat top surface 22 is coarsened. The coarse surface is made of protruding tiny bumps or cavities in order to improve the friction to prevent skidding.

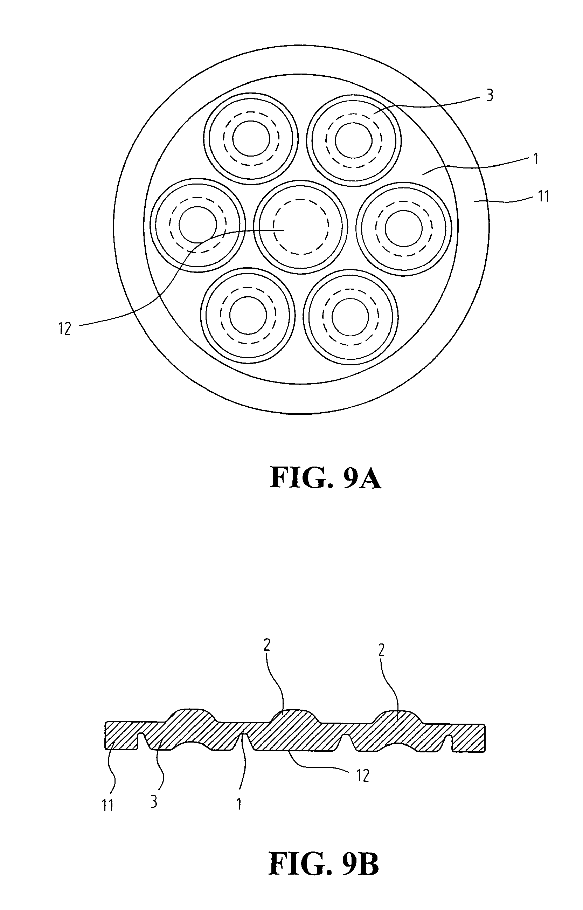

FIGs. 9A & 9B show the fourth embodiment of the present invention. This embodiment includes a flat mark unit 12 at the central part of the bottom of main body 1. Makr unit 12 can be reserved for the government inspection certificate or mark, or for manufacturer trademarks.

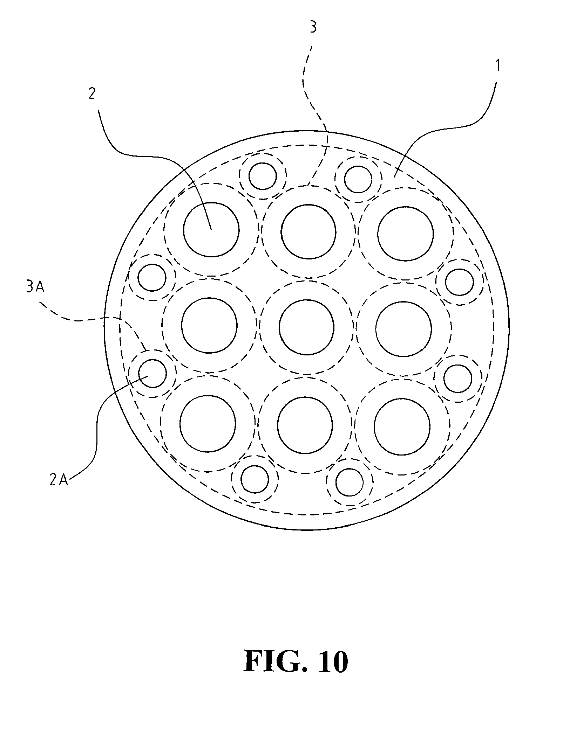

FIG. 10 shows the fifth embodiment of the present invention. This embodiment shows a different arrangement and sizes of the injection units and reflection units. The embodiment shows that injection units 2A and reflection units 3 of smaller sizes can be added to the top and the bottom of main body respectively so that the gap between two adjacent injection units 2 or two adjacent reflection units 3 can be filled by smaller injection units 2A and reflection units 3A. This addition will improve the structural strength of the present invention, as well as improving the reflectivity of the present invention.

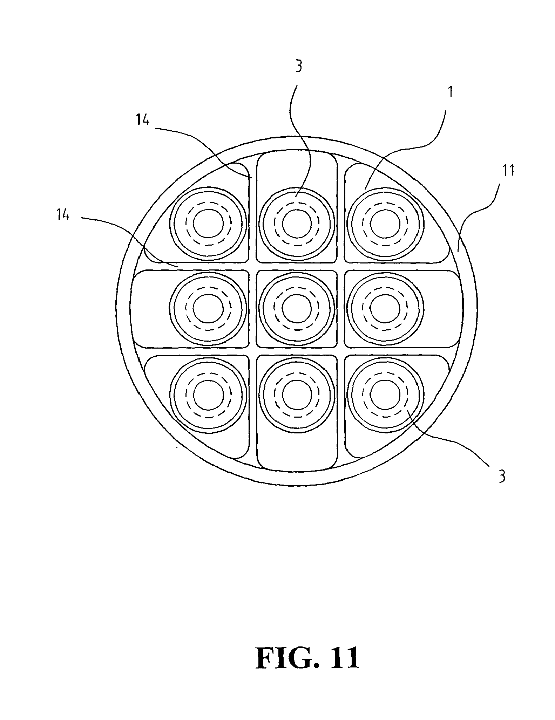

FIG. 11 shows a top view of the sixth embodiment of the present invention. This embodiment includes a plurality of enhancing elements 14 located at the bottom of main body 1. Enhancing elements 14 are placed at the space among frame 11 and reflection unit 13 of main body 1. Enhancing elements 14 can be interconnected to form a net, as shown in FIG. 11, to enhance the overall structure of the present invention. The thickness of enhancing elements 14 should not be higher than the height of reflective units 3. Enhancing elements 14 should be monolithically formed during the manufacturing to ensure the overall structural strength.

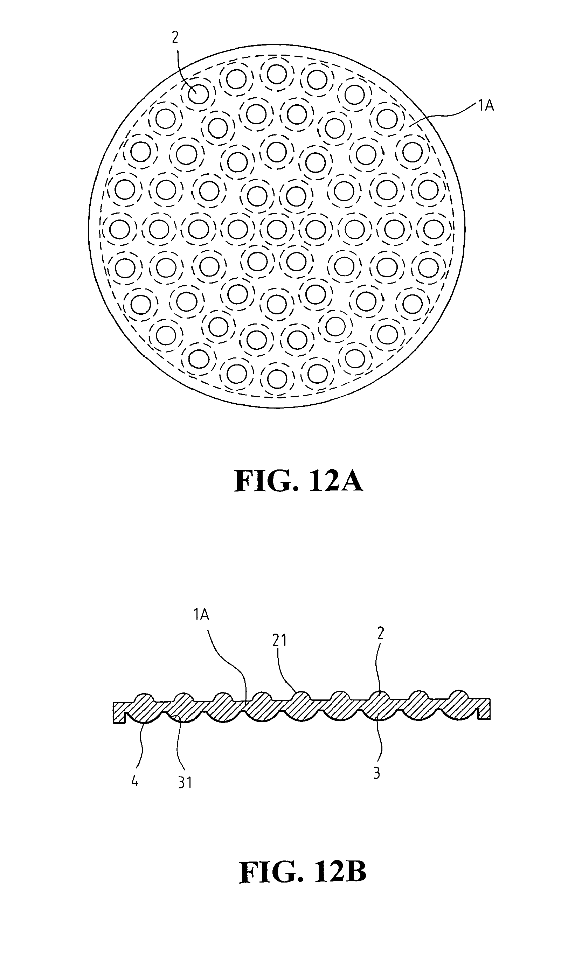

FIGs. 12A & 12B show a top view and a cross-sectional view of the seventh embodiment of the present invention. This embodiment shows the capability to reflect the light from the vertical direction. Main body 1A of this embodiment includes a plurality of injection units 2, and a plurality of reflection units 3. The curvatures of curve injection surface 21 and curve reflection surface 31 are designed to reflect the light from the vertical direction. Therefore, this embodiment of the present invention can be installed on a vertical wall, such as the wall at a T-intersection, the road side curb, or road blockade, to reflect the light to provide visual warning. It can also be installed on the ground to provide visual marks for helicopter landing.

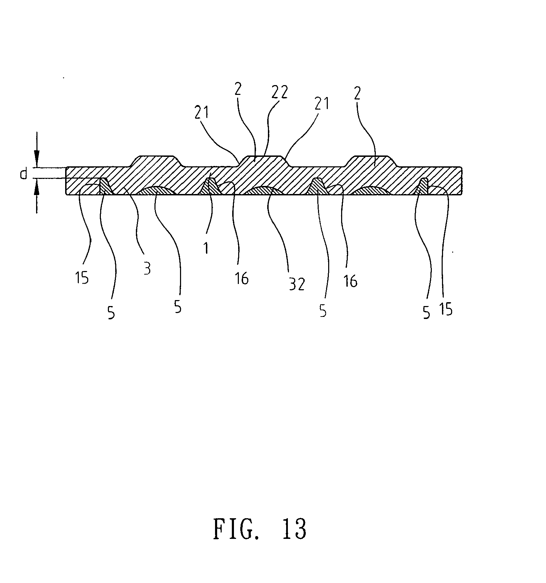

FIG. 13 shows a cross-sectional view of the eighth embodiment of the present invention. In this embodiment, the void space between elements at the bottom of main body 1 is filled with a high strength resin 5 or compound material to strengthen the overall structure. The void space between the elements include space 15 between frame 11 and each reflective unit 3, space 16 between neighboring reflective units 3, and the area formed by concave 32 of reflective unit 3. When high strength resin 5 or compound material fills space 15, space 16, and concave 32, high strength resin 5 or compound material can attach tightly to the bottom of main body 1. This design not only strengthens the overall structure, but also completely seals the outer reflective layer of reflective unit 3 for protection to prolong the reflectivity of main body 1. In addition, the thickness d of main body is at least 3mm to provide good durability.

In all the above embodiments, the main body is made of transparent tempered glass material with good light penetration effects. Any other similar material, such as transparent tempered plastic or color tempered plastic can also be used. This structure has the advantage of lower manufacturing cost, but the disadvantage of shorter life expectancy

In summary, the present invention provides a warning apparatus with a main body having at least two injection units on the top and at least two reflection units on the bottom to achieve reflectivity for visual warning. The structure is monolithically formed, and thus is durable and easy to manufacture.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A warning apparatus, comprising:
a main body, having a thickness and monolithically formed by a transparent tempered material, with at least two injection units formed as upward bumps on the top and at least reflection units formed as downward bumps at the bottom, said injection unit having a curve surface with circumference gradually decreasing from the bottom up, said injection unit having a height no taller than 10mm, said reflection units having a curve surface with circumference gradually decreasing from the top down; and
a reflective layer, stuck to the outer surface of said reflection units for reflecting the light entering from said injection units.

2. The warning apparatus as claimed in claim 1, wherein each said injection unit at the top corresponds to a said reflection unit at the bottom, and the diameter of said reflection unit is larger than the diameter of said injection unit.

3. The warning apparatus as claimed in claim 1, wherein the surface of said bottom of said main body contacting the road surface is coarsened.

4. The warning apparatus as claimed in claim 1, wherein said the height of said injection unit is less no taller than 5mm.

5. The warning apparatus as claimed in claim 1, wherein said main body further comprises a downward protruding frame, and the protruding distance of said frame is at least as the height of reflection unit bumps.

6. The warning apparatus as claimed in claim 1, wherein said curve injection surface includes at least two different curvatures, with diameter gradually decreasing from the bottom up.

7. The warning apparatus as claimed in claim 1, wherein said curve reflection surface includes at least two different curvatures, with diameter gradually decreasing from the top down.

8. The warning apparatus as claimed in claim 1, wherein said main body further comprises a layer of protective thin film at the top surface.

9. The warning apparatus as claimed in claim 8, wherein said protective thin film is made of one of nano-scaled TiO, ZnO, Al₂O₃, SiO₂, glass powder, Au, Ag, Cu, or Sn.

10. The warning apparatus as claimed in claim 1, wherein said main body is made of glass with low iron ingredient; that is, Fe₂O₃ is no more than 0.05%.

11. The warning apparatus as claimed in claim 1, wherein said main body is made of transparent clear glass material, with the bottom covered with a metal reflective layer.

12. The warning apparatus as claimed in claim 1, wherein said main body is made of transparent glass material of specific color

13. The warning apparatus as claimed in claim 1, wherein said main body is made of transparent clear glass material with a thin film of specific color sandwiched between said curve reflection surface and said reflective layer.

14. The warning apparatus as claimed in claim 1, wherein said main body is made of glass with refractive index between Nd 1.4-1.9.

15. The warning apparatus as claimed in claim 1, wherein the shape of said main body is triangular, rectangular, round, oval, and other irregular shape.

16. The warning apparatus as claimed in claim 1, wherein said is made of transparent tempered clear plastic or of plastic specific color.

17. The warning apparatus as claimed in claim 1, wherein the top of said injection units is flattened and coarsened.

18. The warning apparatus as claimed in claim 1, wherein said main body further comprises a flat mark unit at the central part of the bottom.

19. The warning apparatus as claimed in claim 1, wherein the sizes of said injection units are not all identical, and the sizes of said reflection units are not all identical.

20. The warning apparatus as claimed in claim 1, wherein said warning apparatus is installed on the road mark.

21. The warning apparatus as claimed in claim 1, wherein said warning apparatus is installed on a vertical wall.

22. The warning apparatus as claimed in claim 1, further comprising a protective layer on the outer surface of said reflective layer at the bottom of said main body, and said protective layer being made of resin, paint, or anti-erosion material.

23. The warning apparatus as claimed in claim 1, wherein said bottom of said main body further comprises at least one downward protruding tempering element, the height of said tempering element is less than the height of said reflection unit.

24. The warning apparatus as claimed in claim 1, wherein a high strength resin or a compound material fills the void spaces between the elements of said bottom of said main body, and said void spaces comprise the spaces between said reflective units on said bottom of said main body.

25. The warning apparatus as claimed in claim 5, wherein a high strength resin or a compound material fills the void spaces between the elements of said bottom of said main body, and said void spaces comprise the spaces between said frame of said bottom of said main body and said reflective units on said bottom of said main body.

26. The warning apparatus as claimed in claim 1, wherein said bottom of said main body comprises a concave at the center area, and a high strength resin or a compound material fills the void spaces between the elements of said bottom of said main body, and said void spaces comprise the spaces between said reflective units on said bottom of said main body.

27. The warning apparatus as claimed in claim 1, wherein the thickness of said main body is at least 3mm.
